# EUROPÄISCHE PATENTSCHRIFT

(11) **EP 1 065 403 B1**
(45) Veröffentlichungstag und Bekanntmachung des Hinweises auf die Patenterteilung: **23.07.2003**
(21) Anmeldenummer: 00112760.4
(22) Anmeldetag: 16.06.2000
(51) Int. Cl.: F16D 65/12

(54) **Bremsscheibe**
Brake disc
Disque de frein

(30) Priorität: 28.06.1999 DE 19929390
(43) Veröffentlichungstag der Anmeldung: 03.01.2001
(73) Patentinhaber: Otto Sauer Achsenfabrik Keilberg, 63856 Bessenbach-Keilberg (DE)
(72) Erfinder: Koschinat, B. Hubert, 63768 Hössbach (DE)
(74) Vertreter: KEIL & SCHAAFHAUSEN

(56) Entgegenhaltungen:
- DE-A- 1 575 748
- DE-A- 2 033 033
- DE-A- 2 235 627
- US-A- 2 412 432
- US-A- 5 107 966

## Beschreibung

Die Erfindung betrifft eine Bremsscheibenanordnung für Scheibenbremsen nach dem Oberbegriff des Anspruchs 1.

Aus der EP 0 642 632 B1 ist eine Radnaben- und Bremsscheibenanordnung für ein Fahrzeugrad bekannt, welche einen drehbar auf einem Achsstummel durch eine Lagereinrichtung getragenen Nabenabschnitt, einen mit dem Nabenabschnitt verbundenen Bremsscheibenträger, eine drehfest an dem Bremsscheibenträger befestigte Bremsscheibe und einen scheibenförmigen Radträger umfasst, welcher an der Nabe durch eine Schraubenverbindung befestigt und mit dem eine Radfelge verschraubbar ist. Der Bremsscheibenträger ist radial außerhalb der Schraubenverbindung einteilig mit dem Radträger ausgebildet. Der Bremsscheibenträger weist eine nicht kreisförmige äußere Formgebung auf, auf welcher eine Bremsscheibe mit einer Öffnung, die eine übereinstimmende innere Formgebung aufweist, drehfest angeordnet ist. Hierdurch soll eine Radnaben- und Bremsscheibenanordnung vorgesehen werden, bei welcher eine gemeinsame Schraub- oder Schweißverbindung für die Bremsscheibe und den Bremsscheibenträger vermieden werden kann. Die bekannte Anordnung ist insbesondere deswegen nachteilig, weil mit hohem Fertigungsaufwand eine hohe Passgenauigkeit im Bereich der nicht kreisförmigen Formgebungen und eine zusätzliche Sicherung der Bremsscheibe auf dem Bremsscheibenträger gegen axiale Verschiebung vorgesehen werden muss.

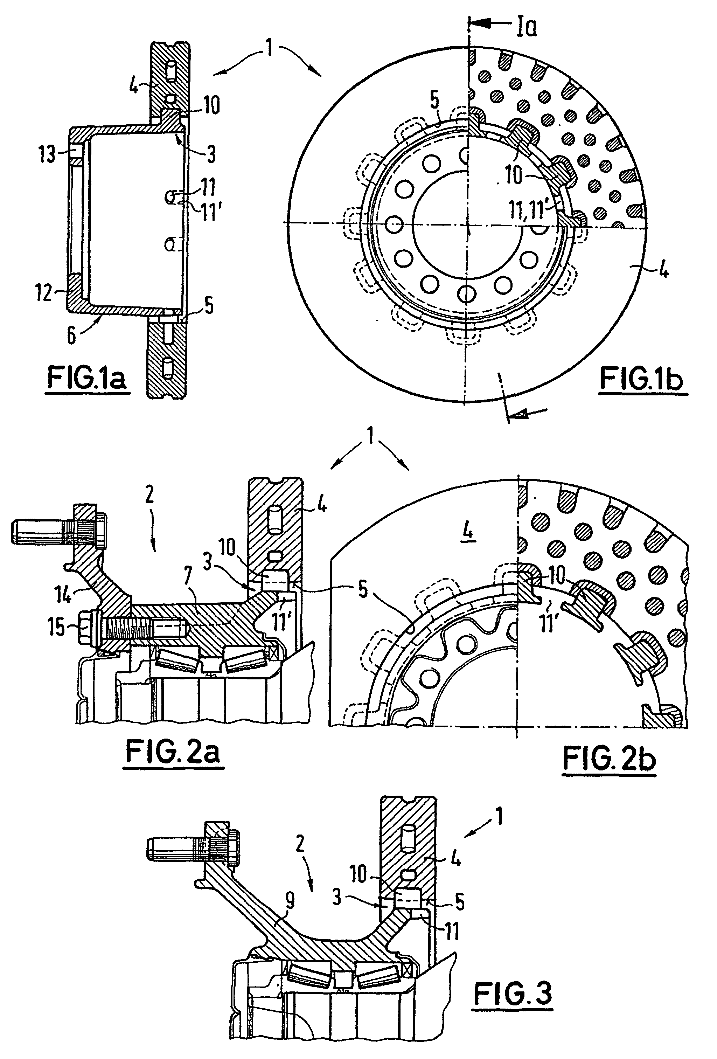

Aus der DE-A-2 033 033 ist eine Bremsscheibe für Scheibenbremsen bekannt, die aus einer Reibscheibe und einer topfförmigen Nabe besteht, welche als Tiefziehteil ausgebildet ist, das mit der aus Grauguss bestehenden Reibscheibe durch Eingießen verbunden ist. Dabei hat die Nabe an ihrer der Verbindung mit der Reibscheibe dienenden Seite einen in radialer Richtung abgebogenen Flansch, der über seinen Umfang verteilte Einschnitte aufweist, wobei die zwischen den Einschnitten verbliebenen Teile des Flansches ebenfalls nur teilweise in die Reibscheibe eingegossen sind. Nach der Zeichnung (vgl. insbesondere die Fig. 3 und 4) endet die Reibscheibe mit ihrem inneren Rand vor der tiefsten Stelle der Einschnitte, so dass Freiräume entstehen. Um eine spannungsfreie Wärmedehnung zwischen Nabe und Reibscheibe sicher zu stellen, kann die Oberfläche der in die Reibscheibe eingegossenen Teile der Nabe, z.B. durch Gleitbondern mit einer Schutzschicht überzogen werden, die ein Festschweißen dieser Teile in der Reibscheibe verhindern soll. Wegen der zwischen Reibscheibe und Trägerabschnitt belassenen Freiräume ist dieser Vorschlag für den schweren Nutzfahrzeugbau ungeeignet.

Aus der EP-A-0 403 799 ist eine Bremsscheibe für Scheibenbremsen für Kraftfahrzeuge, mit einem mindestens einen Reibring umfassenden und aus einem Gusswerkstoff bestehenden Scheibenkranz bekannt, der auf einem ebenfalls aus einem Gusswerkstoff bestehenden Innenkopf derart befestigt sein soll, dass der Scheibenkranz gegenüber dem Innentopf radial elastisch gelagert ist. Dabei weist der Innentopf einen Tragring mit radialen Vertiefungen auf, in welche Teile des Scheibenkranzes radial begrenzt verschiebbar und in Drehmomentrichtung formschlüssig eingreifen. Der Innentopf besteht aus einem Material mit höherer Zugfestigkeit als das Material des Scheibenkranzes und der Scheibenkranz ist mittels Verbundgießens auf dem Innentopf befestigt. Zwischen dem Tragring und einer entsprechenden Ausnehmung des Steges ist ein radialer Abstand vorhanden (vgl. Fig. 1), durch den in für schwere Nutzfahrzeuge nachteiliger Weise eine radiale Freigängigkeit zum Ausgleich der unterschiedlichen Wärmedehnungen von Innentopf und Scheibenkranz vorhanden ist.

Aus der EP-A-0 933 551 ist eine Bremsscheibe mit einem Hut aus einer Aluminium-Gusslegierung einem Bremsring aus Stahlguss oder Gusseisen bekannt, wobei der Hut ebenfalls unter Ausbildung eines radialen Abstandes zwischen Hut und Bremsring an am inneren Umfang des Bremsringes radial einwärts ragende Verankerungsteile lediglich angegossen ist. Die Verankerungsteile sind als am Bremsring angeformte Taschen mit einem radial nach Innen gerichteten, eine Taschenöffnung begrenzenden Taschenrand ausgebildet, wobei der Taschenrand von dem Hut umgossen ist und die Taschen im Wesentlichen mit der Aluminium-Gusslegierung gefüllt sind. Der Träger ist in den Reibring eingegossen. Auf diese Weise ist es nicht möglich, eine Vorspannung des Reibringes auf dem Träger zu erzielen. Ein Aufgießen des Reibringes auf den Träger ist nicht möglich, da der Träger aus verhältnismäßig weichem Aluminium-Werkstoff bestehen soll, welcher wegen der niedrigen Schmelztemperatur ein Aufgießen eines Reibringes nicht gestattet. Das Eingießen hat umgekehrt die Folge, dass durch das während des Erkaltens stark schrumpfenden Aluminiums ein unerwünschtes bleibendes radiales Spiel in den Verzahnungen zwischen Bremsring und Trägerabschnitt verbleibt. Diese bekannte Bremsscheibenanordnung hat weder eine komplementäre Formgebung zwischen Reibscheibe und Trägerabschnitt noch wird der Reibring auf den Trägerabschnitt aufgegossen.

Aufgabe der vorliegenden Erfindung ist es, eine Bremsscheibenanordnung der eingangs genannten Art vorzuschlagen, bei welcher mit einfachen Mitteln eine ungleichmäßige Wärmeverteilung in dem Reibring und damit Verspannung des Reibringes unter den beim Bremsen auftretenden Temperaturen, also das sog. "Aufschirmen" des Reibringes, und eine übermäßige Wärmeableitung auf das Radlager vermieden werden. Damit sollen insbesondere einerseits unerwünschter Verschleiß des Reibringes und Spannungsrisse in dem Reibring vermieden und andererseits einer temperaturbedingten Verkürzung der Lebensdauer der in dem Radlager vorhandenen Schmierfett und/oder vorhandener Lagerteile aus Kunststoff entgegengewirkt werden.

Diese Aufgabe wird erfindungsgemäß bei einer Bremsscheibenanordnung der eingangs genannten Art im Wesentlichen mit den Merkmalen des kennzeichnenden Teils des Anspruchs 1 gelöst.

Es hat sich gezeigt, dass die erfindungsgemäße Gussverbindung zwischen Reibring und Trägerabschnitt, insbesondere, wenn letzterer ebenfalls aus Metallguss besteht, beim ersten Erwärmen der Bremsscheibe, also z.B. beim ersten Bremsen, abreisst, so dass der Reibring von dem Trägerabschnitt getrennt ist. Auf diese Weise wird eine gegenüber dem Stand der Technik in ihrem Aufbau und ihrer Anbringung einfache Bremsscheibe vorgeschlagen, bei welcher aufgrund der auftretenden allerdings nur äußerst geringen Trennfuge zwischen Reibscheibe und Trägerabschnitt übermäßige Spannungen und damit Spannungsrisse in dem Reibring auch bei hoher Bremsleistung, also z. B. im Lastwagenbereich, vermieden sind. Außerdem wird aufgrund des auftretenden Trennspaltes der Wärmefluss von dem Reibring zu dem Trägerabschnitt und damit dem Radlager verhindert.

Bei unterschiedlichen Konstruktionen kann der Trägerabschnitt z. B. von einem topfartigen Nabenabschnitt der Bremsscheibe selbst, einer Lagernabe, an welcher ein Radflansch befestigbar ist, oder von einer bezüglich Lagernabe und Radflansch einteiligen Radflanschnabe gebildet sein, wobei die letzte Variante besonders kostengünstig ist. Im Falle des Reibringwechsels kann die Radnabe (eventuell mit Lager) mit ausgetauscht werden, so dass eine neue Herstellergarantie auf die Gesamtanordnung gegeben werden kann. Wird der Trägerabschnitt von einer einteiligen Radflanschnabe gebildet, so entfällt eine besondere Radflanschverschraubung bei entsprechender Gewichtseinsparung.

Bei Verwendung einer Bremsscheibe mit gesondertem topfartigen Nabenabschnitt kann der Nabenabschnitt z. B. aus hochfestem metallenen Werkstoff und der Reibring aus spezifischem warmfesten Scheibenwerkstoff bestehen.

Die unrunde Formgebung des Trägerabschnitts wird gemäß einem besonderen Erfindungsgedanken von über dessen Aussenumfang verteilten Rippen oder Noppen, vorzugsweise Verrahmungsnoppen, gebildet. Die Anzahl der Rippen oder Noppen kann je nach technischem Erfordernis variiert werden. Es ist auch hier, wie bei einer allgemeinen unrunden Formgebung, keine besondere Fertigungspräzision erforderlich, da aufgrund des Aufgießens des Reibringes auf die unrunde Form z. B. in Form von Rippen oder Noppen, Ungleichmäßigkeiten zwangsläufig ausgeglichen werden. Verrahmungsnoppen haben den Vorteil, dass sie allseits in den Öffnungsrand des Reibringes eintauchen, so dass nicht nur die zuverlässige Übertragung von Drehmomenten, sondern auch eine Sicherung gegen axiales Verschieben des Reibringes auf dem Trägerabschnitt gewährleistet ist, obwohl die unterschiedlichen technischen Ausdehnungen in Radialrichtung nicht behindert werden.

In Weiterbildung des Erfindungsgedankens kann der Trägerabschnitt in dem Bereich der unrunden Formgebung mit Löchern oder Schlitzen für die Luftzirkulation ausgestattet sein.

Ist der Reibring massiv ausgebildet, können die Löcher oder Schlitze entfallen.

In der nachfolgenden Beschreibung werden Ausführungsbeispiele der Erfindung anhand der Zeichnung näher erläutert.

Es zeigen:
- Figur 1a und 1b: im Radialschnitt und in einer teilweise geschnittenen Ansicht eine die Erfindung aufweisende Bremsscheibenanordnung nach einem ersten Ausführungsbeispiel mit topfartigem Lagerabschnitt,
- Figuren 2a und 2b: ebenfalls im Radialschnitt und in einer teilweise geschnittenen Ansicht eine die Erfindung aufweisende Bremsscheibenanordnung nach einem anderen Ausführugnsbeispiel, wobei der Reibring auf einer Lagernabe aufgenommen ist, und
- Figur 3: eine Darstellung ähnlich der von Figur 2a für ein noch weiteres Ausführungsbeispiel der Erfindung, wobei der Reibring auf einer einteiligen Radflanschnabe aufgenommen ist.

Die massive oder (im dargestellten Fall) zur Innenbelüftung ausgebildete Bremsscheibenanordnung 1 gemäß den Figuren 1a und 1b, welche für Scheibenbremsen, insbesondere von Landfahrzeugen, bestimmt ist, hat einen topfartigen Nabenabschnitt 6, welcher einerseits zur Verschraubung mit einer (nicht dargestellten) Radnabe und andererseits zur Verbindung mit einem Reibring 4 ausgebildet ist.

Zum Zwecke der Verbindung mit der Radnabe weist der topfartige Nabenabschnitt 6 an seinem von dem Reibring 3 abgewandten Ende einen radialen Innenflansch 12 mit über dessen Umfang erteilten Löchern 13 für die Aufnahme von (nicht dargestellten) achsparallelen Verbindungsbolzen auf. An seinem dem Reibring 3 zugewandten Trägerabschnitt 3 trägt der Nabenabschnitt 6 über seinen Außenumfang verteilte Verrahmungsnoppen 10. Der Reibring 4 ist im Bereich des Trägerabschnitts 3 des vorgefertigten topfartigen Nabenabschnitts 6 aufgegossen. Dabei kann der Nabenabschnitt 6 der Bremsscheibe 1 ebenso wie der Reibring 4 aus Metallguss bestehen. Der Trägerabschnitt 3 ist femer mit Löschern 11 oder Schlitzen 11' versehen, welche die Luftzirkulation in dem innenbelüfteten Reibring 4 verbessern. Im Falle der Verwendung eines massiven Reibringes 4 können die Löcher 11 oder Schlitze 11' entfallen.

Bei dem Ausführungsbeispiel der Figuren 2a und 2b ist zur Bildung der Bremsscheibe 1 ein ebener Reibring 4 auf den Trägerabschnitt 3 einer Lagernabe 7 selbst aufgegossen. An die Lagernabe 7 kann sich nach außen über Bolzen 15 der Radflansch 14 anschließen.

Bei dem in Figur 3 dargestellten Ausführungsbeispiel ist der Trägerabschnitt 3, auf welchen der Reibring 4 unter teilweisem Umfließen der Verrahmungsnoppen 10 aufgegossen ist, eine einteilige Radflanschnabe 9, welche bezüglich Lagernabe 7 und Radflansch 14 einteilig ausgebildet ist und der unmittelbaren Befestigung des Fahrzeugrades dient.

### Bezugszeichenliste:

- 1: Bremsscheibenanordnung
- 2: Radnabe
- 3: Trägerabschnitt
- 4: Reibring
- 5: Öffnung
- 6: Nabenabschnitt
- 7: Lagernabe
- 8: Radflansch
- 9: Radflanschnabe
- 10: Rippen, Noppen oder dergleichen Formgebungen
- 11, 11': Löcher, Schlitze
- 12: Befestigungsflansch
- 13: Löcher
- 14: Radflansch
- 15: Bolzen

## Patentansprüche

1. Bremsscheibenanordnung für Scheibenbremsen von Landfahrzeugen, mit einem von einem von einem Teil einer Radnabe (2) gebildeten Trägerabschnitt (3) aufgenommenen Reibring (4), wobei der Trägerabschnitt (3) eine unrunde äußere Formgebung aufweist, auf welcher der Reibring (4) mit einer zentrischen Öffnung (5) von einer inneren unrunden Formgebung drehfest sitzt, wobei der Reibring (4) aus Metallguss besteht und wobei der Reibring (4) mit dem Trägerabschnitt (3) so vergossen ist, dass der Reibring (4) von dem Trägerabschnitt (3) getrennt ist, **dadurch gekennzeichnet, dass** der Reibring (4) auf den vorgefertigen Trägerabschnitt (3) derart aufgegossen ist, dass die innere unrunde Formgebung der zentrischen Öffnung (5) des Reibringes (4) komplementär zu der unrunden äußeren Formgebung des Trägerabschnitts (3) ist.

2. Bremschscheibenanordnung nach Anspruch 1, **dadurch gekennzeichnet, dass** auch der Trägerabschnitt aus Metallguss besteht.

3. Bremsscheibenanordnung nach Anspruch 1 oder 2, **dadurch gekennzeichnet, dass** der Trägerabschnitt (3) von einem topfartigen Nabenabschnitt (6) der Bremsscheibe (1) selbst, einer Lagernabe (7), an welcher ein Radflansch befestigbar ist, oder von einer einteiligen Radflanschnabe (9) gebildet ist.

4. Bremsscheibenanordnung nach einem der Ansprüche 1 bis 3, **dadurch gekennzeichnet, dass** der Nabenabschnitt (6) der Bremsscheibe (1) aus hochfestem metallenem Werkstoff und der Reibring (4) aus spezifischem warmfesten Scheibenwerkstoff besteht.

5. Bremsscheibenanordnung nach einem der vorhergehenden Ansprüche, **dadurch gekennzeichnet, dass** die unrunde Formgebung des Trägerabschnitts (3) von über dessen Außenumfang verteilten Rippen oder Noppen, vorzugsweise Verrahmungsnoppen (10), gebildet ist.

6. Bremsscheibenanordnung nach einem der vorhergehenden Ansprüche, **dadurch gekennzeichnet, dass** der Trägerabschnitt (3) in dem Bereich der unrunden Formgebung mit Löschern oder Schlitzen (11, 11') für die Luftzirkulation ausgestattet ist.

7. Bremsscheibenanordnung nach einem der vorhergehenden Ansprüche, **dadurch gekennzeichnet, dass** der Reibring (4) massiv ist.

## Claims

1. Brake disk arrangement for disk brakes of land vehicles, comprising a friction ring (4) received by a carrier section (4) formed by a part of a wheel hub (2), the carrier section (3) having a non-circular outer shaping upon which the friction ring (4) is fixed against rotating with a centrical opening (5) having an inner non-circular shaping, the frictional ring (4) being made of cast metal and the frictional ring (4) being shed with the carrier section (3) in such a manner that the frictional ring (4) is separated from the carrier section (3), **characterized in that** the friction ring (4) ist cast onto the pre-manufactured carrier section in such a manner that the inner non-circular shaping of the centrical opening (5) of the friction ring (4) is complementary to the non-circular outer shaping of the carrier section (3).

2. Brake disk arrangement according to claim 1, **characterized in that** also the carrier section is comprised of cast metal.

3. Brake disk arrangement according to claim 1 or 2, **characterized in that** the carrier section (3) is made of a pot-like hub section (6) of the brake disk (1) itself, a bearing hub (7) onto which a wheel flange is attachable, or of a one-piece wheel flange hub (9).

4. Brake disk arrangement according to one of claims 1 to 3, **characterized in that** the hub section (6) of the brake disk (1) is comprised of high-performance metal material and that the friction ring (4) is comprised of specific high temperature disk material.

5. Brake disk arrangement according to one of the preceding claims, **characterized in that** the non-circular shaping of the carrier section (3) is formed by ribs or knobs, preferably framing knobs (10) distributed over its outer circumference.

6. Brake disk arrangement according to one of the preceding claims, **characterized in that** the carrier section (3) is provided with holes or slots (11, 11') for air circulation in the region of the non-circular shaping.

7. Brake disk arrangement according to one of the preceding claims, **characterized in that** the friction ring (4) is massive.

## Revendications

1. Dispositif de disque de frein pour frein à disque de véhicules terrestres, avec un anneau de friction (4) reçu par un élément support (3) formé par une partie d'un moyeu de roue (2), l'élément support (3) ayant une conformation externe en faux-rond sur laquelle l'anneau de friction (4) est disposé bloqué en rotation avec une ouverture (5) centrée ayant une conformation interne en faux-rond, l'anneau de friction (4) étant en métal coulé et l'anneau de friction (4) étant coulé avec l'élément support (3) de telle sorte que l'anneau de friction (4) est séparé de l'élément support (3), **caractérisé en ce que** l'anneau de friction (4) est coulé sur l'élément support (3) préfabriqué de telle sorte que la conformation interne en faux-rond de l'ouverture (5) centrée est complémentaire de la conformation externe en faux-rond de l'élément support (3).

2. Dispositif de disque de frein selon la revendication 1, **caractérisé en ce que** l'élément support est également en métal coulé.

3. Dispositif de disque de frein selon la revendication 1 ou 2, **caractérisé en ce que** l'élément support (3) est formé par une section de moyeu (6) en forme de pot du disque de frein (1) lui-même, par un moyeu de roulement (7) sur lequel peut être fixé un embout de roue, ou par un moyeu d'embout de roue (9) formé d'une seule pièce.

4. Dispositif de disque de frein selon l'une des revendications 1 à 3, **caractérisé en ce que** la section de moyeu (6) du disque de frein (1) est composée d'un matériau métallique très résistant et l'anneau de friction (4) d'un matériau à disque spécifique résistant à la chaleur.

5. Dispositif de disque de frein selon l'une des revendications précédentes, **caractérisé en ce que** la conformation en faux-rond de l'élément support (3) est formée par des nervures ou des tétons, de préférence des tétons d'encadrement (10).

6. Dispositif de disque de frein selon l'une des revendications précédentes, **caractérisé en ce que** l'élément support (3) est muni dans le domaine de la conformation en faux-rond de trous ou d'encoches (11, 11') pour la circulation de l'air.

7. Dispositif de disque de frein selon l'une des revendications précédentes, **caractérisé en ce que** l'anneau de friction (4) est massif.
